# EUROPEAN PATENT APPLICATION

(11) **EP 4 258 814 A1**
(43) Date of publication of application: **11.10.2023**
(21) Application number: 21900734.1
(22) Date of filing: 12.01.2021
(51) Int. Cl.: H05B 6/06, H05B 6/12, H05B 6/04

(54) **INDUCTION HEATING TYPE COOKTOP AND OPERATING METHOD THEREOF**

(30) Priority: 04.12.2020 KR 20200168981
(71) Applicant: LG Electronics Inc., Yeongdeungpo-gu Seoul 07336 (KR)
(72) Inventor: CHO, Chuhyoung, Seoul 08592 (KR); SON, Seongho, Seoul 08592 (KR); KWACK, Younghwan, Seoul 08592 (KR)
(74) Representative: Ter Meer Steinmeister & Partner
(86) International application number: PCT/KR2021/000391
(87) International publication number: WO 2022/119046

(57) **Abstract**

An induction heating type cooktop according to an embodiment of the present disclosure may comprise: a case; a cover plate which is coupled to an upper end of the case and has an upper plate portion having an upper surface on which an object to be heated is disposed; a working coil provided inside the case; an inverter for applying a voltage to the working coil; a thin film which is provided on the lower surface of the upper plate portion and is inductively heated by the working coil; and a magnetic container determination unit which determines whether a magnetic container is present on the upper surface of the upper plate portion on the basis of an output power according to an operating frequency of the inverter.

## Description

The present disclosure relates to an induction heating type cooktop and an operating method thereof.

### BACKGROUND ART

Various types of cooking equipments are used to heat food at home or in a restaurant. Conventionally, gas stoves using gas as fuel have been widely used, but devices for heating an object to be heated, for example, cooking vessels such as containers, by using electricity instead of gas have recently been spread.

A method of heating an object to be heated using electricity is largely divided into a resistance heating method and an induction heating method. The electric resistance method is a method of heating an object to be heated by transferring heat generated when an electric current flows through a metal resistance wire or a nonmetallic heating element such as silicon carbide to the object to be heated (for example, a cooking vessel) through radiation or conduction. In addition, when high-frequency power of a predetermined magnitude is applied to the coil, the induction heating method generates an eddy current in the object to be heated consisting of a metal component using a magnetic field generated around the coil to heat the object to be heated itself.

Recently, most of the induction heating methods are applied to cooktops.

However, in a case of a cooktop to which an induction heating method is applied, there is a limitation in that only a magnetic material can be heated. In other words, when a nonmagnetic material (for example, heat-resistant glass, pottery, aluminum containers, or the like) is disposed on the cooktop, there is a problem that the cooktop to which the induction heating method is applied cannot heat the object to be heated.

In order to improve the problem of such an induction heating type cooktop, the present disclosure intends to use a thin film. Specifically, the cooktop according to the present disclosure may include a thin film to which an eddy current is applied so that the nonmagnetic material is heated. In addition, the thin film may be formed to have a skin depth thicker than the thickness, and accordingly, the magnetic field generated by the working coil may pass through the thin film and heat the magnetic material by applying an eddy current to the magnetic material.

Meanwhile, in the case of an induction heating method type cooktop using a thin film, it is difficult to distinguish whether a load is present on an upper plate of the cooktop due to the presence of the thin film. Therefore, heating can be continued even when no cooking vessel is present. In this case, since the thin film is heated to a high temperature, there is a problem in that the possibility of safety accidents increases.

### DISCLOSURE OF INVENTION

### TECHNICAL PROBLEM

The present disclosure aims to provide a device capable of detecting the presence or absence of a magnetic cooking vessel on an upper plate portion of an induction heating type cooktop including a thin film.

The present disclosure aims to provide a device for automatically stopping an operation of an induction heating type cooktop including a thin film when a cooking vessel is not detected during a heating operation.

### TECHNICAL SOLUTION

An induction heating type cooktop according to an embodiment included in the present disclosure may include: a case; a cover plate which is coupled to an upper end of the case and has an upper plate portion having an upper surface on which an object to be heated is disposed; a working coil provided inside the case; an inverter for applying a voltage to the working coil; a thin film which is provided on the lower surface of the upper plate portion and is inductively heated by the working coil; and a magnetic container determination unit which determines whether a magnetic container is present on the upper surface of the upper plate portion on the basis of an output power according to an operating frequency of the inverter.

The magnetic container determination unit according to an embodiment of the present disclosure may be configured to determine that the magnetic container is present when the output power according to the operating frequency is equal to or greater than a reference output, and to determine that the magnetic container is not present when the output power according to the operating frequency is less than the reference output.

### ADVANTAGEOUS EFFECTS

According to the present disclosure, there is an advantage in that both a magnetic container and a nonmagnetic container can be heated through an induction heating type cooktop.

In addition, according to the present disclosure, there is an advantage in that it is possible to automatically determine whether a magnetic container is present, and when the magnetic container is not present, safety can be secured by ending heating.

### BRIEF DESCRIPTION OF DRAWINGS

FIG. 1 is a view for explaining an induction heating type cooktop according to an embodiment of the present disclosure.
FIG. 2 is a cross-sectional view illustrating an induction heating type cooktop and an object to be heated according to an embodiment of the present disclosure.
FIG. 3 is a circuit diagram of a cooktop according to an embodiment of the present disclosure.
FIG. 4 is a view illustrating output characteristics of a cooktop according to an embodiment of the present disclosure.
FIG. 5 is a view illustrating output characteristics of a cooktop for each load according to an embodiment of the present disclosure.
FIG. 6 is a view illustrating output characteristics of a cooktop according to a temperature of a load, according to an embodiment of the present disclosure.
FIG. 7 is a graph showing output characteristics of a cooktop according to a temperature and a presence or absence of a magnetic cooking vessel, according to an embodiment of the present disclosure.
FIG. 8 is a control block diagram of an induction heating type cooktop according to an embodiment of the present disclosure.
FIG. 9 is a flowchart illustrating an operating method of a cooktop according to an embodiment of the present disclosure.
FIG. 10 is a graph showing output characteristics of a cooktop according to a temperature and a presence or absence of a magnetic cooking vessel, according to an embodiment of the present disclosure.
FIG. 11 is a graph showing output characteristics of a cooktop according to a temperature and a presence or absence of a magnetic cooking vessel, according to an embodiment of the present disclosure.

### BEST MODE FOR CARRYING OUT THE INVENTION

Hereinafter, preferred embodiments of the present disclosure will be described in detail with reference to the accompanying drawings. Throughout the drawings, the same reference numerals are used to indicate the same or similar components.

Hereinafter, an induction heating type cooktop and an operating method thereof according to an embodiment of the present disclosure will be described. However, for convenience of explanation, the "induction heating type cooktop" may be referred to as a "cooktop".

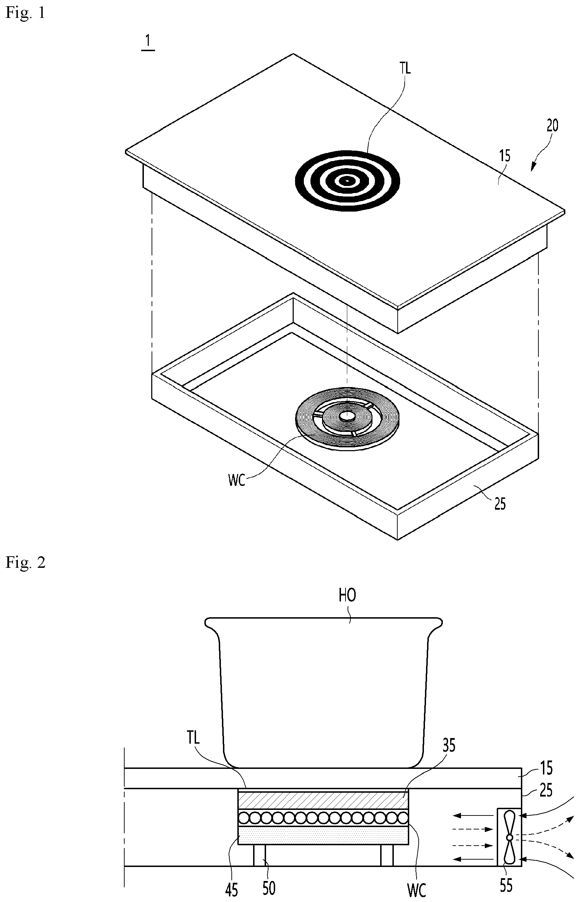

FIG. 1 is a view for explaining an induction heating type cooktop according to an embodiment of the present disclosure. FIG. 2 is a cross-sectional view illustrating an induction heating type cooktop and an object to be heated according to an embodiment of the present disclosure.

First, referring to FIG. 1, an induction heating type cooktop 1 according to an embodiment of the present disclosure may include a case 25, a cover plate 20, a working coil WC, and a thin film TL.

The working coil WC may be installed in the case 25.

For reference, in the case 25, in addition to the working coil WC, various devices related to the driving of the working coil (for example, a power supply that provides AC power, a rectifier that rectifies the AC power of the power supply into DC power, an inverter that converts DC power rectified by the rectifier into a resonance current through a switching operation to provide the resonance current to the working coil, a control module that controls the operations of various devices in the induction heating type cooktop 1, and a relay or semiconductor switch that turns the working coil on or off, and the like) may be installed, but a detailed description thereof will be omitted.

The cover plate 20 may be coupled to the upper end of the case 25, and an upper plate portion 15 on which an object to be heated (not illustrated) is disposed may be provided on the upper surface thereof.

Specifically, the cover plate 20 may include the upper plate portion 15 for placing the object to be heated, such as a cooking vessel.

Here, the upper plate portion 15 may be made of, for example, a glass material (for example, ceramics glass).

In addition, the upper plate portion 15 may be provided with an input interface (not illustrated) that receives an input from a user and transmits the input to a control module (not illustrated) for an input interface. Of course, the input interface may be provided at a location other than the upper plate portion 15.

For reference, the input interface is a module for inputting a desired heating intensity or operating time of the induction heating type cooktop 1 and may be variously implemented as a physical button or a touch panel. In addition, the input interface may include, for example, a power button, a lock button, a power level control button (+, -), a timer control button (+, -), a charging mode button, and the like. In addition, the input interface may transmit the input received from the user to the control module (not illustrated) for the input interface, and the control module for the input interface may transmit the input to the aforementioned control module (that is, the control module for the inverter). In addition, the above-described control module can control the operations of various devices (for example, a working coil) based on an input (that is, a user input) received from the control module for the input interface, and specific details thereof will be omitted.

Meanwhile, on the upper plate portion 15, whether the working coil WC is driven and the heating intensity (that is, thermal power) may be visually displayed in the shape of a crater. The shape of the crater may be indicated by an indicator (not illustrated) composed of a plurality of light emitting devices (for example, LEDs) provided in the case 25.

The working coil WC may be installed inside the case 25 to heat the object to be heated.

Specifically, the working coil WC may be controlled to be driven by the aforementioned control module (not illustrated), and when the object to be heated is disposed on the upper plate portion 15, the working coil WC may be driven by the control module.

In addition, the working coil WC can directly heat a magnetic object to be heated (that is, a magnetic material), and can indirectly heat a nonmagnetic object to be heated through a thin film TL, which will be described later.

In addition, the working coil WC may heat an object to be heated by an induction heating method and may be provided to overlap the thin film TL in a longitudinal direction (that is, a vertical direction or an up and down direction).

For reference, although it is illustrated in FIG. 1 that one working coil WC is installed in the case 25, the present disclosure is not limited thereto. In other words, one or three or more working coils may be installed in the case 25, but for convenience of explanation, the embodiment of the present disclosure will be described with reference to an example in which one working coil WC is installed in the case 25.

The thin film TL may be provided on the upper plate portion 15 to heat a nonmagnetic material among the objects to be heated. The thin film TL may be inductively heated by the working coil WC. In addition, as the thin film TL is heated, the object to be heated may be heated by heat convection or heat conduction from the thin film TL.

The thin film TL may be provided on the upper or lower surface of the upper plate portion 15.

The thin film TL may be provided to overlap the working coil WC in a longitudinal direction (that is, a vertical direction or an up and down direction). Accordingly, it is possible to heat the object to be heated, regardless of the disposition position and type of the object to be heated.

In addition, the thin film TL may have at least one of magnetic and nonmagnetic properties (that is, magnetic, nonmagnetic, or both magnetic and nonmagnetic).

In addition, the thin film TL may be made of, for example, a conductive material (for example, silver (Ag)), and as illustrated in the drawing, a plurality of rings having different diameters may be provided on the upper plate portion 15 in a repeating shape, and the thin film TL may be made of a material other than the conductive material. In addition, the thin film TL may be formed in a shape other than a shape in which a plurality of rings having different diameters are repeated.

For reference, although it is illustrated in FIG. 1 that one thin film TL is installed, the present disclosure is not limited thereto. That is, when there is a plurality of craters, a plurality of thin films may be additionally provided, but for convenience of explanation, a case where one thin film TL is provided will be described as an example.

Next, referring to FIG. 2, the induction heating type cooktop 1 according to an embodiment of the present disclosure may further include at least some or all of a heat insulator 35, a shielding plate 45, a support member 50, and a cooling fan 55.

The heat insulator 35 may be provided between the upper plate portion 15 and the working coil WC.

Specifically, the heat insulator 35 may be mounted under the upper plate portion 15, and the working coil WC may be disposed under the heat insulator 35.

The heat insulator 35 may block the transfer of heat, which is generated while the thin film TL or the object to be heated HO is heated by the driving of the working coil WC, to the working coil WC.

In other words, when the thin film TL or the object to be heated HO is heated by electromagnetic induction of the working coil WC, the heat of the thin film TL or the object to be heated HO is transferred to the upper plate portion 15, and the heat of the upper plate portion 15 is transferred back to the working coil WC, and thus the working coil WC may be damaged.

The heat insulator 35 blocks the transfer of the heat to the working coil WC in this way, thereby preventing the working coil WC from being damaged by heat, and furthermore, preventing the decrease in the heating performance of the working coil WC.

For reference, although not an essential component, a spacer (not illustrated) may be installed between the working coil WC and the heat insulator 35.

Specifically, the spacer (not illustrated) may be inserted between the working coil WC and the heat insulator 35 so that the working coil WC and the heat insulator 35 do not directly contact each other. Accordingly, the spacer (not illustrated) may block the transfer of heat, which is generated while the thin film TL or the object to be heated HO is heated by the driving of the working coil WC, to the working coil WC through the heat insulator 35.

In other words, the spacer (not illustrated) can share a part of the role of the heat insulator 35, and thus the thickness of the heat insulator 35 can be minimized, and thus, the spacing between the object to be heated HO and the working coil WC can be minimized.

In addition, a plurality of spacers (not illustrated) may be provided, and the plurality of spacers may be disposed to be spaced apart from each other between the working coil WC and the heat insulator 35. Accordingly, air suctioned into the case 25 by the cooling fan 55 to be described later may be guided to the working coil WC by the spacer.

In other words, the spacer may improve the cooling efficiency of the working coil WC by guiding the air flowing into the case 25 by the cooling fan 55 to be properly transmitted to the working coil WC.

The shielding plate 45 may be mounted on the lower surface of the working coil WC to block a magnetic field generated downward when the working coil WC is driven.

Specifically, the shielding plate 45 may block a magnetic field generated downward when the working coil WC is driven and may be supported upward by the support member 50.

The support member 50 may be installed between the lower surface of the shielding plate 45 and the lower plate of the case 25 to support the shielding plate 45 upward.

Specifically, the support member 50 may support the shielding plate 45 upwardly, thereby indirectly supporting the heat insulator 35 and the working coil WC upwardly, and thus, the heat insulator 35 can be in close contact with the upper plate portion 15.

As a result, the distance between the working coil WC and the object to be heated HO can be kept constant.

For reference, the support member 50 may include, for example, an elastic body (for example, a spring) for supporting the shielding plate 45 upward, but is not limited thereto. In addition, since the support member 50 is not an essential component, the support member 50 may be omitted in the induction heating type cooktop 1.

The cooling fan 55 may be installed inside the case 25 to cool the working coil WC.

Specifically, the cooling fan 55 may be controlled to be driven by the aforementioned control module and may be installed on the sidewall of the case 25. Of course, the cooling fan 55 may be installed at a location other than the sidewall of the case 25, but in an embodiment of the present disclosure, for convenience of explanation, a case where the cooling fan 55 is installed on the sidewall of the case 25 will be described as an example.

In addition, as illustrated in FIG. 2, the cooling fan 55 may suction air from the outside of the case 25 and transfer the air to the working coil WC, or may suction air (particularly, heat) inside the case 25 and discharge the air to the outside of the case 25.

In this manner, efficient cooling of the components (particularly, the working coil WC) inside the case 25 is possible.

In addition, as described above, the air outside the case 25 transferred to the working coil WC by the cooling fan 55 may be guided to the working coil WC by the spacer. Accordingly, direct and efficient cooling of the working coil WC is possible, thereby improving the durability of the working coil WC (that is, improving the durability by preventing thermal damage).

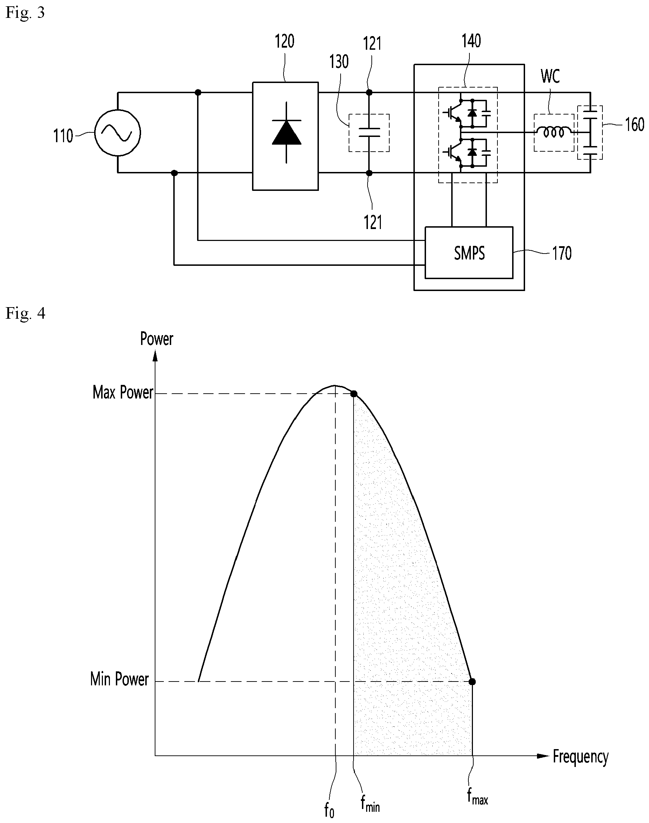

As such, the induction heating type cooktop 1 according to an embodiment of the present disclosure may have the above-described characteristics and configuration. Hereinafter, the circuit configuration and heating characteristics of the cooktop 1 according to an embodiment of the present disclosure will be described in detail with reference to FIGS. 3 to 4.

FIG. 3 is a circuit diagram of a cooktop according to an embodiment of the present disclosure.

Since the circuit diagram of the cooktop 1 illustrated in FIG. 3 is merely illustrative for convenience of explanation, the present disclosure is not limited thereto.

Referring to FIG. 3, the induction heating type cooktop may include at least some or all of a power supply 110, a rectifier 120, a DC link capacitor 130, an inverter 140, a working coil WC, a resonance capacitor 160, and a switching mode power supply (SMPS) 170.

The power supply 110 may receive external power. The power that the power supply 110 receives from the outside may be alternation current (AC) power.

The power supply 110 may supply AC voltage to the rectifier 120.

The rectifier 120 is an electrical device for converting alternating current into direct current. The rectifier 120 converts an AC voltage supplied through the power supply 110 into a DC voltage. The rectifier 120 may supply the converted voltage to two DC terminals 121.

The output terminal of the rectifier 120 may be connected to the two DC terminals 121. The two DC terminals 121 output through the rectifier 120 may be referred to as a DC link. A voltage measured across the two DC terminals 121 is referred to as a DC link voltage.

The DC link capacitor 130 serves as a buffer between the power supply 110 and the inverter 140. Specifically, the DC link capacitor 130 is used to maintain the DC link voltage converted through the rectifier 120 and supply the DC link voltage to the inverter 140.

The inverter 140 serves to switch a voltage applied to the working coil WC so that a high-frequency current flows through the working coil WC. The inverter 140 causes a high-frequency current to flow through the working coil WC by driving a switching element made of an insulated gate bipolar transistor (IGBT), and thus a high-frequency magnetic field is formed in the working coil WC.

Current may or may not flow through the working coil WC depending on whether the switching element is driven. When current flows through the working coil WC, a magnetic field is formed. The working coil WC may heat the cooking appliance by generating a magnetic field as the current flows.

One side of the working coil WC is connected to a connection point of the switching element of the inverter 140, and the other side of the working coil WC is connected to the resonance capacitor 160.

The driving of the switching element is performed by a driver (not illustrated) and is controlled at a switching time output from the driver to apply a high-frequency voltage to the working coil WC while the switching elements alternately operate with each other. In addition, since the on/off time of the switching element applied from the driver (not shown) is controlled in a gradually compensated manner, the voltage supplied to the working coil WC changes from a low voltage to a high voltage.

The resonance capacitor 160 may be a component for serving as a shock absorber. The resonance capacitor 160 affects energy loss for a turn-off time by adjusting a saturation voltage rise rate during the turn-off of the switching element.

The SMPS 170 refers to a power supply that efficiently converts power according to a switching operation. The SMPS 170 converts the DC input voltage into a voltage in the form of a square wave, and then obtains a controlled DC output voltage through a filter. The SMPS 170 may minimize unnecessary loss by controlling the flow of power using a switching processor.

In the case of the cooktop 1 configured with the circuit diagram illustrated in FIG. 3, the resonance frequency is determined by the inductance value of the working coil WC and the capacitance value of the resonance capacitor 160. In addition, a resonance curve is formed around the determined resonance frequency, and the resonance curve may represent the output power of the cooktop 1 according to the frequency band.

Next, FIG. 4 is a view illustrating output characteristics of the cooktop according to an embodiment of the present disclosure.

First, a Q factor (quality factor) may be a value representing the sharpness of resonance in the resonance circuit. Therefore, in the case of the cooktop 1, the Q factor is determined by the inductance value of the working coil WC and the capacitance value of the resonance capacitor 160 in the cooktop 1. The resonance curve is different depending on the Q factor. Accordingly, the cooktop 1 has different output characteristics according to the inductance value of the working coil WC and the capacitance value of the resonance capacitor 160.

FIG. 4 illustrates an example of the resonance curve according to the Q factor. In general, as the Q factor increases, the shape of the curve is sharper, and as the Q factor decreases, the shape of the curve is broader.

The horizontal axis of the resonance curve may represent frequency, and the vertical axis of the resonance curve may represent output power. The frequency at which the maximum power is output in the resonance curve is referred to as a resonance frequency f0.

In general, the cooktop 1 uses a frequency in the right region based on the resonance frequency f0 of the resonance curve. In addition, the cooktop 1 may have a preset minimum operating frequency and a preset maximum operating frequency that are operable.

For example, the cooktop 1 may operate at a frequency corresponding to a range from a maximum operating frequency fmax to a minimum operating frequency fmin. That is, the operating frequency range of the cooktop 1 may be from the maximum operating frequency fmax to the minimum operating frequency fmin.

For example, the maximum operating frequency fmax may be an IGBT maximum switching frequency. The IGBT maximum switching frequency may refer to a maximum driving frequency in consideration of withstand voltage and capacity of the IGBT switching element. For example, the maximum operating frequency fmax may be 75 kHz.

The minimum operating frequency fmin may be about 20 kHz. In this case, since the cooktop 1 does not operate at an audible frequency (about 16 Hz to about 20 kHz), noise of the cooktop 1 can be reduced.

Meanwhile, since the setting values of the maximum operating frequency fmax and the minimum operating frequency fmin described above are only examples and are not limited thereto.

When the cooktop 1 receives a heating command, the cooktop 1 may determine an operating frequency according to a heating power level set in the heating command. Specifically, the cooktop 1 may control the output power by lowering the operating frequency as the set heating power level increases and increasing the operating frequency as the set heating power level decreases. That is, when the cooktop 1 receives a heating command, the cooktop 1 may perform a heating mode operating in one of the operating frequency ranges according to the set heating power.

Meanwhile, most cooktops 1 provide an automatic container detection function for user safety. The automatic container detection function is a function of determining whether a cooking vessel is present on the upper plate portion 15 of the cooktop 1 and cutting off the power when it is determined that there is no cooking vessel, and is a function of preventing damage to internal components when the heating operation is continued even though the cooking vessel is not present on the upper plate portion 15.

However, in the case of the induction heating type cooktop 1 including the thin film TL, it is difficult to distinguish whether a load is present on the upper plate of the cooktop 1 due to the presence of the thin film TL. Specifically, it is difficult for the cooktop 1 to distinguish between a case where a nonmetallic cooking vessel (for example, glass container) is placed on the upper plate and the thin film TL needs to be heated and a case where the thin film TL must not be heated because nothing is placed on the upper plate. This may be a problem that occurs because the heating characteristics of the working coil WC do not change when a nonmetal container is placed on the upper plate of the cooktop 1.

Therefore, the induction heating type cooktop 1 including the thin film TL can be heated without recognizing the cooking vessel even when the cooking vessel is not present. In this case, since the thin film TL can be heated up to 500°C, there is a high possibility of a safety accident.

Hereinafter, the induction heating type cooktop for solving these problems and the operating method thereof will be described.

The automatic container detection function may include a method using the resonance current of the working coil WC and a method using the output power according to the operating frequency described with reference to FIG. 4. In the present specification, as the method of determining whether the cooking vessel is present, the method using the output power according to the operating frequency will be mainly described, but the present disclosure is not limited thereto.

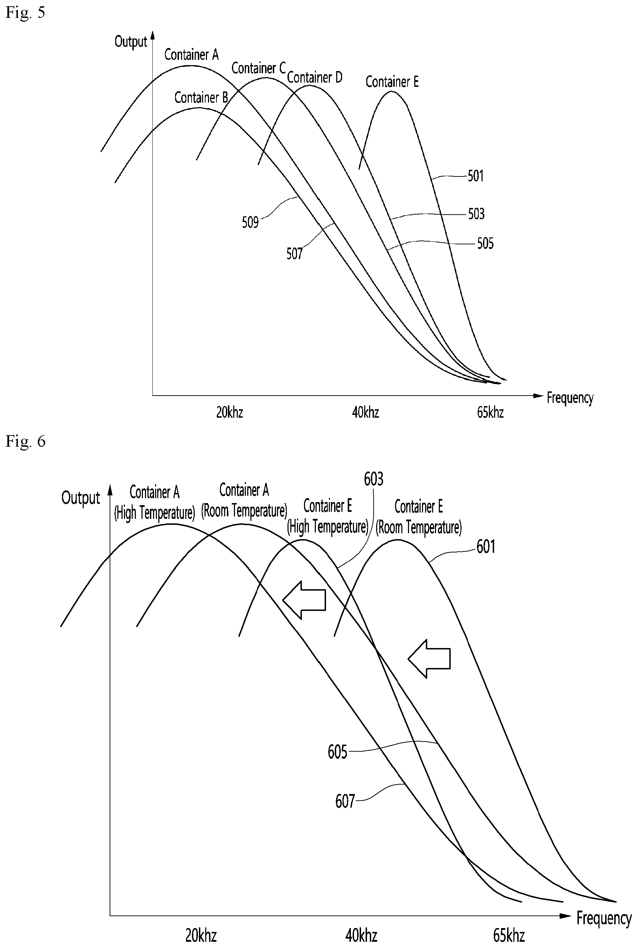

First, FIG. 5 is a view illustrating output characteristics of the cooktop for each load according to an embodiment of the present disclosure. FIG. 6 is a view illustrating output characteristics of the cooktop according to the temperature of the load, according to an embodiment of the present disclosure.

FIG. 5 is graphs 501, 503, 505, 507, and 509 showing output characteristics of five cooking vessels having different materials for each operating frequency, and FIG. 6 is graphs 601, 603, 606, and 607 showing output characteristics of two cooking vessels having different materials for each operating frequency according to the temperature.

Referring to FIG. 5, it can be seen that the output characteristics based on the operating frequency vary depending on the material of the cooking vessel. The cooktop 1 of the present disclosure may be designed in consideration of the output characteristics depending on the materials of various cooking vessels.

Referring to FIG. 6, a first graph 601 is a graph showing output characteristics of a cooking vessel E at room temperature, a second graph 603 is a graph showing output characteristics of the cooking vessel E at a high temperature, a third graph 605 is a graph showing output characteristics of a cooking vessel A at room temperature, and a fourth graph 607 is a graph showing output characteristics of the cooking vessel A at a high temperature. At this time, the room temperature may mean that the temperature of the thin film is 20°C, and the high temperature may mean that the temperature of the thin film is 500°C, but this is only an example.

Through the graph of FIG. 6, it can be seen that, as the temperature of the thin film increases, the output of both the cooking vessel A and the cooking vessel E decreases at the same operating frequency.

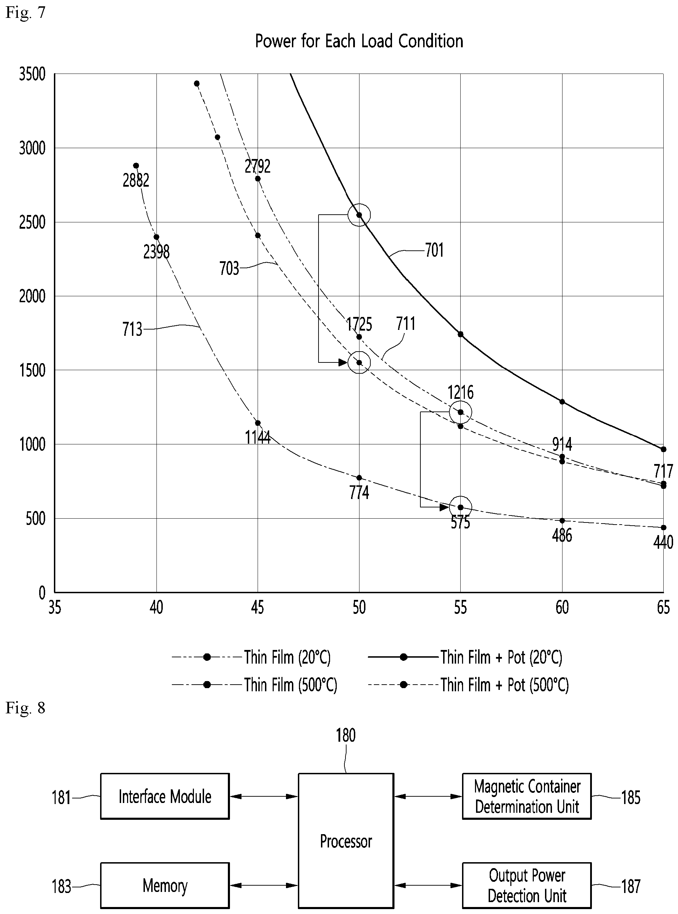

Next, FIG. 7 is a graph showing output characteristics of a cooktop according to a temperature and a presence or absence of a magnetic cooking vessel, according to an embodiment of the present disclosure.

Referring to FIG. 7, a first graph 701 shows an output according to a frequency when the magnetic container is present at room temperature, a second graph 703 shows an output according to a frequency when the magnetic container is present at a high temperature, a third graph 711 shows an output according to a frequency when only the thin film TL is present at room temperature, and a fourth graph 713 shows an output according to a frequency when only the thin film TL is present at a high temperature.

When comparing the first graph 701 with the second graph 703, it can be seen that, as described above, the output with respect to the same operating frequency decreases when the temperature of the thin film TL is high. And it can be seen that this is the same even when the third graph 711 and the fourth graph 713 are compared with each other.

In addition, when comparing the first graph 701 with the third graph 711, it can be seen that the output in the case where only the thin film TL is present is reduced with respect to the same operating frequency, compared with the case where the magnetic cooking vessel is present. It can be seen that this is the same even when the second graph 703 and the fourth graph 713 are compared with each other.

In summary, in the induction heating type cooktop 1 including the thin film TL, it can be seen through the above graphs that the output decreases at the same operating frequency in the case where the magnetic cooking vessel is not present (that is, when only the thin film TL is present), compared with the case where the magnetic cooking vessel is present, and the output decreases in the case where the temperature of the thin film TL is high, compared with the case where the temperature is low.

FIG. 8 is a control block diagram of an induction heating type cooktop according to an embodiment of the present disclosure.

The induction heating type cooktop 1 according to an embodiment of the present disclosure may include at least some or all of a processor 180, an interface module 181, a memory 183, a magnetic container determination unit 185, and an output power detection unit 187. In addition, according to embodiments, the cooktop 1 may omit some of the above-described components or may further include other components. That is, the components illustrated in FIG. 8 are only examples in order to describe the cooktop 1 according to an embodiment of the present disclosure.

The processor 180 may perform overall controls of the cooktop 1. The processor 180 may control the interface module 181, the memory 183, the magnetic container determination unit 185, and the output power detection unit 187, which are illustrated in FIG. 8, and the power supply 110, the rectifier 120, the DC link capacitor 130, the inverter 140, the working coil WC, the resonance capacitor 160, and the SMPS 170, which are illustrated in FIG. 3.

The interface module 181 may receive a user input. The interface module 181 may have a physical key button or may be implemented in the form of a touch screen to receive the user input. For example, the interface module 181 may receive a heating command to start a heating mode, a forced heating mode command to start a forced heating mode, a heating power selection command to adjust heating power, a heating end command, and the like.

The memory 183 may store data related to the operation of the cooktop 1. For example, the memory 183 may store data in which the output power is mapped according to the operating frequency for each load condition, data in which the output power is mapped according to the operating frequency for each material of the cooking vessel, data in which the output power is mapped data according to the temperature and the operating frequency. For example, the memory 183 may store an output power according to an operating frequency of a cooking vessel made of a first material, may store an output power according of the cooking vessel made of the first material for each temperature, may store an output power of a cooking vessel made of a second material according to an operating frequency and an output power of the cooking vessel made of the second material according to the operating frequency for each temperature, and the like.

The magnetic container determination unit 185 may determine whether the magnetic container is currently present on the upper plate portion 15 of the cooktop 1. The magnetic container determination unit 185 may determine whether the magnetic container is present, based on the operating frequency of the inverter 140, the output power detected through the output power detection unit 187, and the data stored in the memory 183.

The output power detection unit 187 may detect the current output power of the cooktop 1. The output power detection unit 187 may detect the output power by sensing an input voltage and an input current, which are input to the working coil WC, and multiplying the two values, but this is only an example.

In addition, it is illustrated in FIG. 8 that the processor 180, the magnetic container determination unit 185, and the output power detection unit 187 are shown separately, but this is only an example, and operations performed by the magnetic container determination unit 185 and the output power detection unit 187 may also be performed by the processor 180.

Next, an operating method of the cooktop 1 according to an embodiment of the present disclosure will be described.

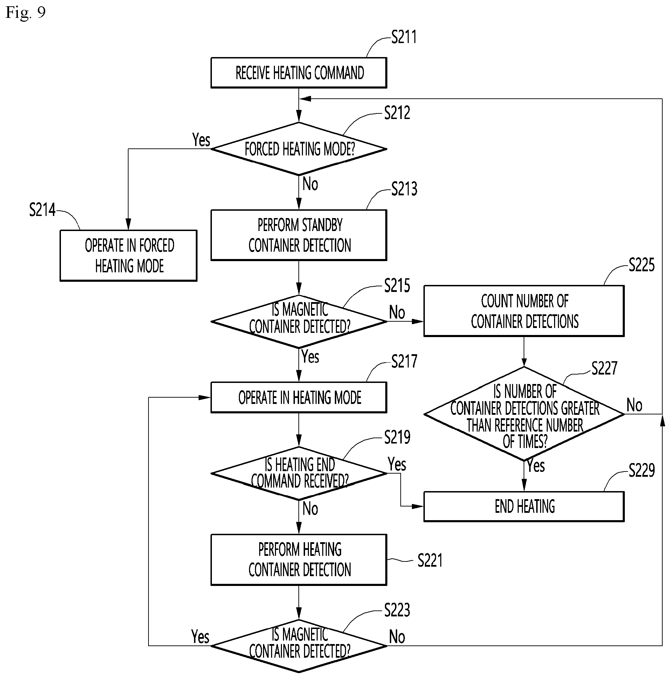

FIG. 9 is a flowchart illustrating the operating method of the cooktop according to an embodiment of the present disclosure.

First, the cooktop 1 may receive a heating command (S211). The processor 180 of the cooktop 1 may receive the heating command through the interface module 181.

The processor 180 may determine whether the received heating command is a forced heating mode command (S212). The forced heating mode may be a mode in which heating is continued with a set heating power even when the container is not detected. According to an embodiment of the present disclosure to be described later, the cooktop 1 may end heating when the magnetic container is not detected. Accordingly, in the present disclosure, the forced heating mode may be a mode used when a user wants to heat a nonmagnetic container. When it is determined that the received heating command is the forced heating mode command, the processor 180 may operate in the forced heating mode (S214).

When the received heating command is not the forced heating mode command, the processor 180 may start a standby container detection (S213).

The standby container detection may mean detecting whether the magnetic container is present on the upper plate portion 15 of the cooktop 1 before operating in a heating mode. The processor 180 may recognize the heating mode command other than the forced heating mode as a mode for heating the magnetic container, and may detect whether the magnetic container is present on the upper plate portion 15 of the cooktop 1 before operating in the heating mode.

The magnetic container determination unit 185 may perform magnetic container detection in a standby state. The magnetic container determination unit 185 may detect whether the magnetic container is present through the operating frequency and output power of the inverter 140.

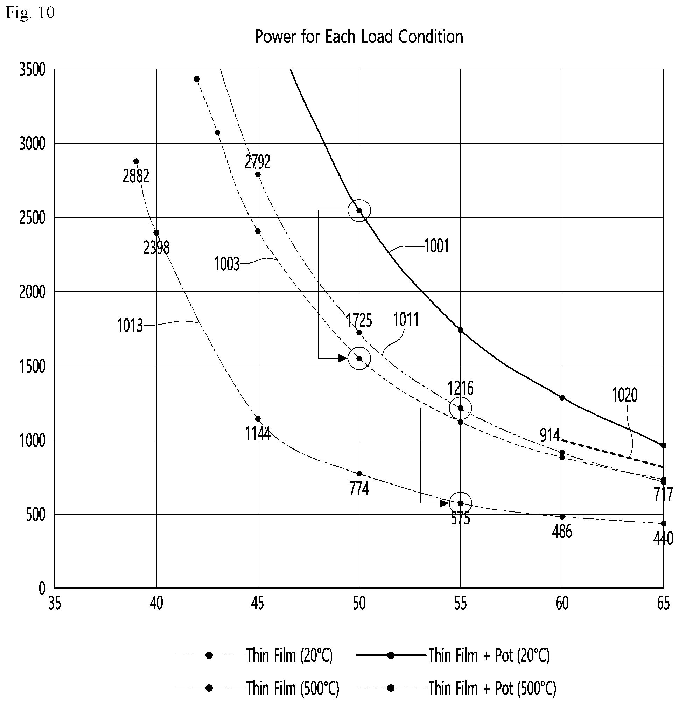

The method for determining whether the magnetic container is present when the magnetic container determination unit 185 is in the standby state, according to an embodiment of the present disclosure, will be described in detail with reference to FIG. 10.

FIG. 10 is a graph showing output characteristics of a cooktop according to a temperature and a presence or absence of a magnetic cooking vessel, according to an embodiment of the present disclosure.

Referring to FIG. 10, a first graph 1001 shows an output according to a frequency when the magnetic container is present at room temperature, a second graph 1003 shows an output according to a frequency when the magnetic container is present at a high temperature, a third graph 1011 shows an output according to a frequency when only the thin film TL is present at room temperature, and a fourth graph 1013 shows an output according to a frequency when only the thin film TL is present at a high temperature.

A standby reference output 1020 may be set to a value between an output power 1001 when the magnetic container is present at room temperature and an output power 1011 when only the thin film TL is present at room temperature.

Alternatively, the standby reference output 1020 may be set to a value between a higher value among the output power 1011 when only the thin film TL is present at room temperature and the output power 1003 when the magnetic container is present at a high temperature, and the output power 1001 when the magnetic container is present at room temperature.

According to embodiments, the standby reference output 1020 may be set to a value higher by a predetermined percentage than a higher value among the output power 1011 when only the thin film TL is present at room temperature and the output power 1003 when the magnetic container is present at a high temperature. In this case, the predetermined percentage may mean 10%, but this is only an example.

The standby reference output 1020 may vary according to the material of the container and may vary according to the output characteristics of the container. The standby reference output 1020 may be a value prestored in the memory 183 or a value learned by the processor 180 through various data.

The magnetic container determination unit 185 may determine that the magnetic container is present when the output power according to the operating frequency is greater than or equal to the standby reference output 1020. On the contrary, the magnetic container determination unit 185 may determine that the magnetic container is not present when the output power according to the operating frequency is less than the standby reference output 1020.

In addition, the magnetic container determination unit 185 may perform standby magnetic container detection in a high frequency band. This is to prevent accuracy deterioration due to heating of the thin film and the container by the frequency for detecting the container when the standby container detection is performed in a low frequency band. At this time, the standby reference output 1020 may be set only in a high frequency band (for example, between 60 khz and 65 khz).

Returning back to FIG. 9, the processor 180 may operate in a heating mode when the magnetic container determination unit 185 determines that the magnetic container is present on the upper plate portion 15 (S217).

The processor 180 may control the inverter 140 and the like when operating in the heating mode. Accordingly, the inverter 140 may be driven so that current flows through the working coil WC, and the working coil WC can generate a magnetic field.

The processor 180 may operate in the heating mode according to the input heating command until the heating end command is received (S219).

The processor 180 may perform heating container detection while operating in the heating mode (S221).

The heating container detection may mean detecting whether the magnetic container is present on the upper plate portion 15 of the cooktop 1 while operating in the heating mode. This is to detect a case where the user removes the cooking container during heating. Accordingly, the processor 180 may periodically detect whether the magnetic container is present during heating.

The magnetic container determination unit 185 may perform magnetic container detection in a heating state. The magnetic container determination unit 185 may detect whether the magnetic container is present during heating through the operating frequency and output power of the cooktop 1. As described above, in the heating state, the output characteristics may vary according to the standby state and the operating frequency, and thus, the magnetic container determination unit 185 may change the reference output. That is, the magnetic container determination unit 185 may change the reference output according to whether the induction heating type cooktop 1 is in the standby state or in the heating state.

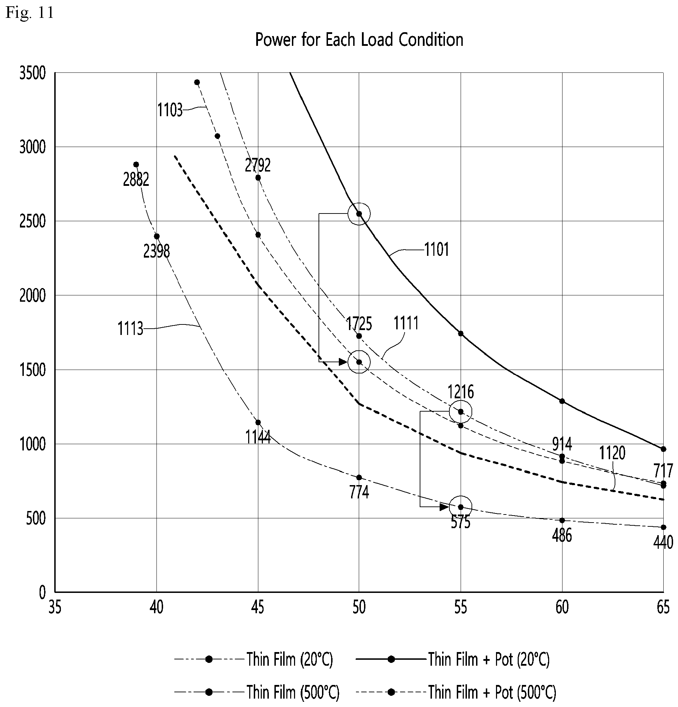

Hereinafter, the method for determining whether the magnetic container is present when the magnetic container determination unit 185 is in the heating state, according to an embodiment of the present disclosure, will be described in detail with reference to FIG. 11.

FIG. 11 is a graph showing output characteristics of a cooktop according to a temperature and a presence or absence of a magnetic cooking vessel, according to an embodiment of the present disclosure.

Referring to FIG. 11, a first graph 1101 shows an output according to a frequency when the magnetic container is present at room temperature, a second graph 1103 shows an output according to a frequency when the magnetic container is present at a high temperature, a third graph 1111 shows an output according to a frequency when only the thin film TL is present at room temperature, and a fourth graph 1113 shows an output according to a frequency when only the thin film TL is present at a high temperature.

A heating reference output 1120 may be set to a value between an output power 1103 when the magnetic container is present at a high temperature and an output power 1113 when only the thin film TL is present at a high temperature.

Alternatively, the heating reference output 1120 may be set to a value between a lower value among the output power 1111 when only the thin film TL is present at room temperature and the output power 1103 when the magnetic container is present at a high temperature, and the output power 1113 when the magnetic container is present at a high temperature.

According to embodiments, the heating reference output 1120 may be set to a value lower by a predetermined percentage than a lower value among the output power 1111 when only the thin film TL is present at room temperature and the output power 1103 when the magnetic container is present at a high temperature. In this case, the predetermined percentage may mean 10%, but this is only an example.

The heating reference output 1120 may vary according to the material of the container and may vary according to the output characteristics of the container. The heating reference output 1120 may be a value prestored in the memory 183 or a value learned by the processor 180 through various data.

The magnetic container determination unit 185 may determine that the magnetic container is present when the output power according to the operating frequency is greater than or equal to the heating reference output 1120. On the contrary, the magnetic container determination unit 185 may determine that the magnetic container is not present when the output power according to the operating frequency is less than the heating reference output 1120.

In addition, the magnetic container determination unit 185 may perform heating magnetic container detection in a whole operating frequency band.

Returning back to FIG. 9, the processor 180 may continuously operate in a heating mode when the magnetic container determination unit 185 determines that the magnetic container is present on the upper plate portion 15 (S217).

When the magnetic container determination unit 185 determines that the magnetic container is not present on the upper plate portion 15, the processor 180 may return to operation S212 to determine whether the received heating command is the forced heating mode. Since operation

S212 is the same as described above, a redundant description thereof is omitted.

When the processor 180 determines that the received heating command is not the forced heating mode, the processor 180 may perform the standby container detection (S213), and when the magnetic container is not detected (S215), the processor 180 may count the number of container detections (S225).

The counting of the number of container detections may mean counting the number of times the magnetic container determination unit 185 has attempted to detect the magnetic container but has not detected the magnetic container.

The processor 180 may count the number of container detections and determine whether the number of container detections is greater than a reference number of times (S227). In this case, the reference number of times may be a preset value. For example, when the reference number of times is 5 times, the processor 180 may determine whether the magnetic container determination unit 185 has failed to detect the container five times or more.

The processor 180 may end the heating when it is determined that the number of container detections is greater than the reference number of times (S229). In addition, the processor 180 may also end heating when receiving a heating end command through the interface module 181 (S229).

According to the above-described embodiment, the cooktop 1 of the present disclosure may separately operate in a mode of heating the magnetic container and a mode of heating the nonmagnetic container. In addition, there is an advantage in that the cooktop 1 of the present disclosure can automatically determine whether the magnetic container is present, and when the magnetic container is not present, the cooktop 1 can secure safety by ending heating.

According to an embodiment, the induction heating type cooktop 1 may further include a computer-readable recording medium or a memory (not illustrated) having recorded thereon programs for performing the various methods described above. The method of the present disclosure described above may be provided by recording, on a computer-readable recording medium, a program to be executed on a computer.

The method of the present disclosure may be executed through software. When implemented as software, the constituent means of the present disclosure are code segments that perform the necessary tasks. Programs or code segments may be stored on a processor-readable medium.

The computer-readable recording medium includes any types of recording devices in which data readable by a computer system is stored. Examples of the computer-readable recording devices include read-only memory (ROM), random access memory (RAM), compact disc read-only memory (CD-ROM), digital versatile disc (DVD)±ROM, DVD-RAM, magnetic tape, floppy disk, hard disk, optical data storage device, and the like. In addition, the computer-readable recording medium may be distributed to computer devices connected through a network, and computer-readable code may be stored and executed in a distributed manner.

Various substitutions, modifications, and changes can be made to the present disclosure described above by those of ordinary skill in the art, without departing from the technical concept of the present disclosure. Therefore, the scope of the present disclosure is not limited by the foregoing embodiments and accompanying drawings.

## Claims

1. An induction heating type cooktop comprising:
a case;
a cover plate which is coupled to an upper end of the case and has an upper plate portion having an upper surface on which an object to be heated is disposed;
a working coil provided inside the case;
an inverter configured to apply a voltage to the working coil;
a thin film which is provided on a lower surface of the upper plate portion and is inductively heated by the working coil; and
a magnetic container determination unit configured to determine whether a magnetic container is present on the upper surface of the upper plate portion on the basis of an output power according to an operating frequency of the inverter.

2. The induction heating type cooktop of claim 1, wherein the magnetic container determination unit is configured to determine that the magnetic container is present when the output power according to the operating frequency is equal to or greater than a reference output, and to determine that the magnetic container is not present when the output power according to the operating frequency is less than the reference output.

3. The induction heating type cooktop of claim 2, wherein the reference output includes a standby state reference output that is a reference for determining the magnetic container in a standby state, and a heating state reference output that is a reference for determining the magnetic container in a heating state.

4. The induction heating type cooktop of claim 3, wherein the magnetic container determination unit is configured to change the reference output according to whether the induction heating type cooktop is in the standby state or in the heating state.

5. The induction heating type cooktop of claim 3, wherein the standby state reference output is a value between an output power when the magnetic container is present at room temperature and an output power when only the thin film is present at room temperature.

6. The induction heating type cooktop of claim 3, wherein the heating state reference output is a value between an output power when the magnetic container is present at a high temperature and an output power when only the thin film is present at a high temperature.

7. The induction heating type cooktop of claim 1, further comprising a processor configured to perform control to stop the operation of the inverter when the magnetic container determination unit determines that the magnetic container is not present on the upper surface of the upper plate portion.

8. The induction heating type cooktop of claim 7, wherein the processor is configured to count the number of container detections the magnetic container determination unit determines that the magnetic container is not present on the upper surface of the upper plate portion, and to perform control to stop the operation of the inverter when the number of counts is greater than a predetermined number of times.

9. The induction heating type cooktop of claim 7, wherein the processor is configured to control the inverter to operate in a heating mode when the magnetic container determination unit determines that the magnetic container is present on the upper surface of the upper plate portion.

10. An operating method of an induction heating type cooktop, the operating method comprising:
driving an inverter to apply a voltage to a working coil;
detecting an output power according to an operating frequency of the inverter; and
determining whether a magnetic container is present on the working coil, based on the operating frequency and the output power.
